# EUROPEAN PATENT SPECIFICATION

(11) **EP 4 680 041 B1**
(45) Date of publication and mention of the grant of the patent: **25.11.2026**
(21) Application number: 24709074.9
(22) Date of filing: 07.03.2024
(51) Int. Cl.: A23L 27/26, A23L 27/21

(54) **AN EXTRUSION PROCESS FOR PREPARING A FOOD FLAVOR PRODUCT**
EXTRUSIONSVERFAHREN ZUR HERSTELLUNG EINES LEBENSMITTELAROMAPRODUKTS
PROCÉDÉ D'EXTRUSION POUR LA PRÉPARATION D'UN PRODUIT AROMATIQUE ALIMENTAIRE

(30) Priority: 15.03.2023 EP 23162012
(43) Date of publication of application: 21.01.2026
(73) Proprietor: Société des Produits Nestlé S.A., 1800 Vevey (CH)
(72) Inventor: MONTEIRO DE ARAUJO SILVA, Maria, 78224 Singen (DE); JAECKEL, Martin, 78234 Engen (DE); PAJIC, Aleksandar, 57234 Wilnsdorf (DE); REYNES, Pierre, 80450 Camon (FR); SABUNCUOGLU, Safiye Nur, 78467 Konstanz (DE)
(86) International application number: PCT/EP2024/056046
(87) International publication number: WO 2024/188813

(56) References cited:
- WO-A1-2022/101143
- US-A1- 2002 044 968
- US-A1- 2011 165 304
- US-A1- 2011 189 367
- US-A1- 2020 146 318
- US-A1- 2021 206 045
- REIFSTECK B M ET AL: "RETENTION OF VOLATILE FLAVORS IN CONFECTIONS BY EXTRUSION PROCESSING", FOOD REVIEWS INTERNATIONAL, NEW YORK, NY, US, vol. 16, no. 4, 1 January 2000 (2000-01-01), pages 435 - 452, XP009031840, DOI: 10.1081/FRI-100102318

## Description

The invention relates generally to an extrusion process for preparing a food flavor product. More specifically, the present invention relates to an extrusion process for preparing a food flavor product, wherein at least one vent stuffer is located within the last 2/3 part of the total length of the extruder barrel.

There is a persisting need for an extrusion process for preparing a food flavor product. Unfortunately, the preparation of a food flavor product is fraught with difficulties. A caking of the obtained food flavor product is observed when lower amounts of crystalline carriers are desired. The caking of the obtained food flavor product needs further drying and optionally milling step to obtain a free-flowing powder of the food flavor product.

A process for the production of a food or feed flavour by extrusion of cystein and/ or glutathione, fat, and optional ingredients such as flavours and reducing sugars, is disclosed in US 2011/165304 A1. The presence of vent stuffers is not disclosed.

The object of the present invention is to improve the state of the art and to provide an extrusion process for preparing a food flavor product that at least goes part way to overcome one or more of the above-mentioned disadvantages of existing processes or at least provides a useful alternative. Particularly, the objective is to provide an extrusion process for preparing a food flavor product: i) reduce or even eliminate caking of the obtained food flavor product; ii) avoid an additional drying step of the food flavor product; iii) avoid an additional drying step of the food flavor product downstream of the extruder; iv) allow the excess trapped moisture inter- and/or intra- particles to escape properly out of the extrusion process; v) provide a cost-effective solution; vi) deliver a more intense food flavor product.

The object of the present invention is achieved by the subject matter of the independent claims. The dependent claims further develop the idea of the present invention.

Accordingly, the present invention provides in a first aspect an extrusion process for preparing a food flavor product comprising the steps of:
a) feeding an extruder barrel (7) with a composition comprising at least one carrier, at least one amino nitrogen source and at least one sugar source;
b) extruding the composition from step a) at a temperature between 35 to 170°C;
wherein at least one vent stuffer is located within the last 2/3 part of the total length of the extruder barrel.

Disclosed herein, but not part of the invention as claimed, is the use at least one vent stuffer (4) in an extrusion process for preparing a food flavor product wherein at least one vent stuffer is located within the last 2/3 part of the total length of the extruder barrel.

In a preferred embodiment the extrusion process for preparing a food flavor product does not include a vent stuffer (4) at a location up-stream without a first kneading and melting section.

It has now been found by the inventors that using at least one vent stuffer in an extrusion process for preparing a food flavor product, wherein at least one vent stuffer is located within the last 2/3 part of the total length of the extruder barrel has certain desirable and surprising characteristics. The extrusion process of the present disclosure allows the continuous production of an extruded food flavor product having a more intense flavor and being flow-able without applying a further drying step.

In an embodiment, the present invention provides an extrusion process for preparing a food flavor product comprising the steps of:
a) feeding an extruder barrel (7) with a composition comprising at least one carrier in an amount between 5 to 95wt% (based on total composition), at least one amino nitrogen source in an amount between 0.1 to 35wt% (based on total composition) and at least one sugar source in an amount between 1 to 35wt% (based on the total composition);
b) extruding the composition from step a) at a temperature between 35 to 170°C;
wherein at least one vent stuffer is located within the last 2/3 part of the total length of the extruder barrel.

In an embodiment, the present invention provides an extrusion process for preparing a food flavor product comprising the steps of:
a) feeding an extruder barrel (7) with a composition comprising at least one carrier, at least one amino nitrogen source, at least one sugar source and a lipid;
b) extruding the composition from step a) at a temperature between 35 to 170°C;
wherein at least one vent stuffer is located within the last 2/3 part of the total length of the extruder barrel.

In an embodiment, the present invention provides an extrusion process for preparing a food flavor product comprising the steps of:
a) feeding an extruder barrel (7) with a composition comprising at least one carrier in an amount between 5 to 95wt% (based on total composition), at least one amino nitrogen source in an amount between 0.1 to 35wt% (based on total composition), at least one sugar source in an amount between 1 to 35wt% (based on the total composition) and a lipid in an amount between 0.5 to 10wt% (based on the total composition);
b) extruding the composition from step a) at a temperature between 35 to 170°C;
wherein at least one vent stuffer is located within the last 2/3 part of the total length of the extruder barrel.

In an embodiment, the present invention provides an extrusion process for preparing a food flavor product comprising the steps of:
a) feeding an extruder barrel (7) with a composition comprising at least one carrier in an amount between 5 to 95wt% (based on total composition), at least one amino nitrogen source in an amount between 0.1 to 35wt% (based on total composition) and at least one sugar source in an amount between 1 to 35wt% (based on the total composition);
b) extruding the composition from step a) at a temperature between 50 to 170°C;
wherein at least one vent stuffer is located within the last 2/3 part of the total length of the extruder barrel.

In an embodiment, the present invention provides an extrusion process for preparing a food flavor product comprising the steps of:
a) feeding an extruder barrel (7) with a composition comprising at least one carrier, at least one amino nitrogen source, at least one sugar source and a lipid;
b) extruding the composition from step a) at a temperature between 50 to 170°C;
wherein at least one vent stuffer is located within the last 2/3 part of the total length of the extruder barrel.

In an embodiment, the present invention provides an extrusion process for preparing a food flavor product comprising the steps of:
a) feeding an extruder barrel (7) with a composition comprising at least one carrier in an amount between 5 to 95wt% (based on total composition), at least one amino nitrogen source in an amount between 0.1 to 35wt% (based on total composition), at least one sugar source in an amount between 1 to 35wt% (based on the total composition) and a lipid in an amount between 0.5 to 10wt% (based on the total composition);
b) extruding the composition from step a) at a temperature between 50 to 170°C;
wherein at least one vent stuffer is located within the last 2/3 part of the total length of the extruder barrel.

The term "vent stuffer" refers to a housing inside which one or two screws rotate and push the extruded material back into the extruder process section. The vent stuffer pushes materials back into the extruder process section that might "fly out" due to a high vent vapor velocity, high system pressure and/or low melt viscosity materials being pulled by the pressure or vacuum. Preferably, it is designed to be connected to a vacuum pump. The vacuum of the vent stuffer is selected from 0 to 1000mbar, preferably between 1 to 1000mbar, preferably between 50 to 1000mbar, preferably between 100 to 1000mbar, more preferably between 500 to 1000 mbar. In a preferred embodiment at least one vent stuffer is located within the last 2/3 part of the total length of the extruder barrel, preferably within the last half of the total length of the extruder barrel, preferably within the last quarter part of the total length of the extruder barrel, preferably within the last sixth part of the total length of the extruder barrel, preferably one vent stuffer is located within the last screw element of the extruder barrel. In a more preferred embodiment 1 to 3 vent stuffers are located within the last 2/3 part of the total length of the extruder barrel, preferably within the last half of the total length of the extruder barrel, preferably within the last quarter part of the total length of the extruder barrel. In a more preferred embodiment 1 to 2 vent stuffers are located within the last 2/3 part of the total length of the extruder barrel, preferably within the last half of the total length of the extruder barrel, preferably within the last quarter part of the total length of the extruder barrel.

The terms "food," "food product" and "food composition" mean a product or composition that is intended for ingestion by a human.

"Extrusion" is a process used to create objects of a fixed cross-sectional profile. A material is pushed or pulled through a die of the desired cross-section. The two main advantages of this process over other manufacturing processes are its ability to create very complex cross-sections, and to prepare products that are brittle, because the material only encounters compressive and shear stresses. Extruders typically comprise an extruder barrel within which rotates a close-fitting screw. The screw is made up of screw elements, some of which are helical screw threads to move material through the extruder barrel. Material is introduced into the extruder barrel toward one end, moved along the extruder barrel by the action of the screw and is forced out of the extruder barrel through a nozzle or die at the other end. The rotating screw mixes and works the material in the barrel and compresses it to force it through the die or nozzle. The degree of mixing and work to which the material is subjected, the speed of movement of the material through the extruder barrel and thus the residence time in the extruder barrel and the pressure developed in the extruder barrel can be controlled by the pitch of the screw thread elements, the speed of rotation of the screw and the rate of introduction of material into the extruder barrel. The extruder barrel comprises multiple extruder barrel sections which are joined end to end. Multiple extruder barrel sections are required to carry out different processes involved in extrusion such as conveying, kneading, mixing, devolatilizing or degassing, metering and the like. Each extruder barrel section comprises a liner which is press fit into an extruder barrel block, and heating and cooling elements are provided to regulate temperature of extruder barrel section within permissible range. The total length of an extrusion process can be defined by its modular extrusion barrel length. An extruder barrel is described by its unit of diameter.

The extruder according to the method of the present invention may be, for example, a co-rotating, intermeshing double screw extruder; a counter rotating, non-intermeshing double screw extruder; a single screw reciprocating extruder; or a single screw non reciprocating extruder. The powder conveying section comprises screw elements which are capable of rapidly delivering a dry powder to a downstream extrusion process. Conveying section screw elements are typically screw elements having a relatively wide pitch and which are forward flighted. Typically, the kneading and melt section provides for the application of externally provided heat as well as that produced by shearing. Typical screw elements used in a kneading and melting zone include forward and reverse flighted kneading blocks.

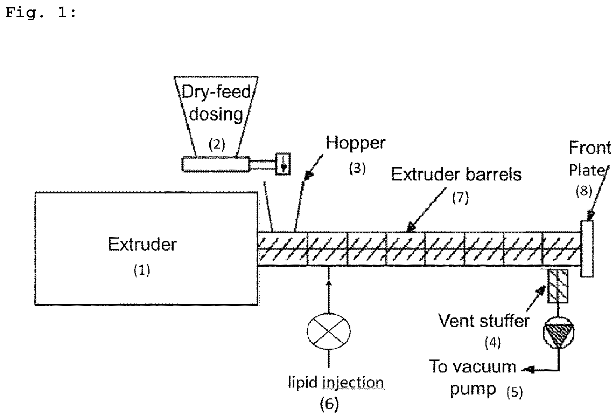

As generally illustrated in FIG. 1, the present disclosure provides an extrusion process for preparing a food flavor product, wherein at least one vent stuffer (4) is located within the last 2/3 part of the total length of the extruder barrel, preferably one vent stuffer is located within the last screw element of the extruder barrel. The process can comprise a) dry feeding an extruder barrel (7) with starting material (2), (3); b) optionally injection of lipid (6) down-stream of the dry feeding; c) extruding the mixture; d) at least one vent stuffer (4) located within the last 2/3 part of the total length of the extruder barrel, preferably one vent stuffer is located within the last screw element of the extruder barrel.

The term "carrier" in the context of this invention includes maltodextrin, starch, flour, salt, fiber or a combination thereof, preferably maltodextrin, starch, flour, salt, or a combination thereof. In a preferred embodiment the carrier is a combination of salt with maltodextrin, fiber, starch or flour, preferably a combination of salt with maltodextrin, starch or flour. The term "starch" includes wheat starch, corn starch, potato starch, maize starch, waxy maize starch, tapioca starch, rice starch, cassava starch, or combination thereof, preferably wheat starch, corn starch, potato starch or combination thereof. The term "flour" includes wheat flour, corn flour, potato flour, maize flour, waxy maize flour, tapioca flour, rice flour, cassava flour, soy flour, or combination thereof, preferably wheat flour, corn flour, potato flour, rice flour, soy flour or combination thereof. The term "salt" includes sodium chloride, potassium chloride, ammonium chloride or a combination thereof, more preferably sodium chloride. The term "fibers" includes dietary fibers, cereal bran or combination thereof. Dietary fiber consists of the remnants of edible plant cells, polysaccharides, lignin and associated substances resistant to (hydrolysis) digestion by the alimentary enzymes of humans. The dietary fibers are from vegetables, fruits, cereal or combinations thereof. Dietary fibers are selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus or combinations thereof, preferably carrot, beetroot, pumpkin, citrus, wheat, oat, bamboo, tomato or combinations thereof. "Bran" according to this invention is the outer layers of the grains consists of pericarp, testa, aleurone layer germ, and may comprise of a part of the starchy endosperm. Commercial bran preparations contain variable amounts of the starchy endosperm and germ depending on the variety of cereal and the milling process. Bran mainly is obtained from cereal grain selected from the group of barley, buckwheat, bulgur, canary grass, common oat (Avena sativa, also referred to herein as oats), corn, millet, rice (e.g. black rice, brown rice and/or wild rice), rye, sorghum, spelt, teff, triticale, wheat and, wheat berries. More preferred whole grain cereals are those from the monocotyledonous plants of the Poaceae family (grass family) cultivated for their edible, starchy grains. Plant species that do not belong to the grass family also produce starchy seeds or fruits that may be used in the same way as cereal grains, are called pseudo-cereals. Examples of pseudo- cereals include amaranth, buckwheat, tartar buckwheat and quinoa. Unless the context herein clearly indicates, otherwise, the term 'cereal' as used herein includes both cereal and pseudo-cereals; and the brans used herein may be from either type. In general, the source of grain that is used depends on the product to which it is to be added, since each grain has its own taste profile. In one embodiment of the present invention, the cereal bran is selected from the group consisting of rice bran, wheat bran, buckwheat bran, corn bran, oat bran, barley bran, or a combination thereof. In an embodiment, the food flavor product comprises the carrier in an amount of 5-95wt%, preferably 10-95, preferably 15-95, preferably 20-95, preferably 25-95, preferably 30-95wt%, preferably 33-93wt%. In an embodiment the food flavor product comprises the carrier as a combination of salt in an amount of 10-65wt% with maltodextrin, fiber, starch or flour in an amount of 10-60wt%, preferably the food flavor product comprises the carrier as a combination of salt in an amount of 10-65wt% with maltodextrin, starch or flour in an amount of 10-60wt%.

The term "amino-nitrogen source" in the context of this invention includes asparagine, glutamic acid, lysine, glutamine, thiamine, alanine, glycine, threonine, cysteine, methionine, arginine, glutathione, plant protein, yeast extract, bacterial extract, vegetable extract, hydrolyzed plant protein or a combination thereof, preferably cysteine, methionine, arginine, glutathione, glutamic acid, plant protein, yeast extract, bacterial extract, vegetable extract, hydrolyzed plant protein or a combination thereof, preferably cysteine, methionine, arginine, glutathione, plant protein, yeast extract, bacterial extract, vegetable extract, hydrolyzed plant protein or a combination thereof. A bacterial extract is described within WO2009040150 or WO2010105842. A vegetable extract is described within WO2013092296. In an embodiment, the food flavor product comprises the amino nitrogen source in an amount of 0.1-35wt%, preferably 0.5-35wt%, preferably 1-35wt%, preferably 2-35wt%. The plant protein is selected from the group of protein concentrate or plant protein isolate from pea protein, corn protein (e.g., ground corn or corn gluten), wheat protein (e.g., ground wheat or wheat gluten such as vital wheat gluten), potato protein, legume protein such as soy protein (e.g., soybean meal, soy concentrate, or soy isolate), rice protein (e.g., ground rice or rice gluten), barley protein, algae protein, canola protein or combinations thereof, preferably soy, pea, wheat or a combination thereof.

The term "sugar source" in the context of this invention includes glucose, fructose, galactose, lactose, arabinose, erythrose, rhamnose, mannose, isomaltose, sorbose, psicose, ribose, sucrose, xylose, ribose, dextrose, malt extract, rice syrup, corn syrup, carob syrup, or a combination thereof, preferably glucose, fructose, galactose, lactose, sucrose, xylose, ribose, dextrose, malt extract, rice syrup, corn syrup, carob syrup, or a combination thereof, preferably sucrose, xylose, ribose, dextrose, malt extract, rice syrup, corn syrup, carob syrup or a combination thereof. In an embodiment, the food flavor product comprises the sugar source in an amount of 1-35wt%, preferably 2-35wt%, preferably 1-30wt%, preferably 2-30wt%.

The term "lipid" means oil, fat or combination thereof. It includes soybean oil, corn oil, sunflower oil, high oleic sunflower oil, olive oil, canola oil, safflower oil, peanut oil, palm oil, cottonseed oil, coconut oil, sesame oil, linseed oil, almond oil, hazelnut oil, rape seed oil, chicken fat, beef fat, pork fat, shea butter, fractionated palm fat, fully or partially hydrogenated or inter-esterified palm oil and combinations thereof. Preferably the liquid oil is sunflower oil, palm oil, canola oil, chicken fat, pork fat, beef fat or a combination thereof. In an embodiment, the food flavor product comprises the lipid in an amount of 0.5-10wt%, preferably 0.5-9wt%, preferably 0.5-8wt%, preferably 0.5-7wt%, preferably 0.5-6wt%, preferably 0.5-5wt%, more preferably 1-7wt%; more preferably 1-6wt%. The lipid can be mixed with dry ingredients before feeding the mixture to the extruder barrel or the lipid is injected separately into the extruder barrel. The use of lipid has a beneficial effect of de-dusting the composition and providing additional flavor.

In an embodiment, the food flavor product further comprises pH regulator. The term "pH regulator" includes NaOH, HCl, citric acid, acetic acid, ascorbic acid or combination thereof. In an embodiment, the food flavor product comprises the pH regulator in an amount of 0.05-5wt%, preferably 0.05-2wt%.

In an embodiment, the food flavor product further comprises vegetable powder. The term "vegetable powder" includes tomato powder, garlic powder, onion powder or combination thereof. In an embodiment, the food flavor product comprises the vegetable powder in an amount of 0.5-30wt%, preferably 1-30wt%, preferably 1-25wt%.

In an embodiment water in an amount between 0 to 10wt% is added into the composition of step a) or is afterwards injected into the extruder barrels, preferably no water is added into the composition of step a) or is afterwards injected into the extruder barrels.

The extruder barrels are heated to a temperature of between 35 to 170°C, preferably 50 to 170°C, preferably between 70 to 170°C, preferably between 80-170°C, preferably between 80-160°C, preferably between 35-150°C, preferably between 50-150°C, preferably between 80-150°C. The pressure on the front plate (6) is between 20 to 150 bar, preferably 20 to 100 bar. The screw speed is around 200-500rpm.

In an embodiment no drying step is used after step b). Due to the used vent stuffer(s) a drying step can be avoided, which simplifies the process of the current invention.

In an embodiment the extrusion process for preparing a food flavor product further comprises milling the obtained food flavor product after step b).

As used in this specification, the words "comprises", "comprising", and similar words, are not to be interpreted in an exclusive or exhaustive sense. In other words, they are intended to mean "including, but not limited to".

Those skilled in the art will understand that they can freely combine all features of the present invention disclosed herein. In particular, features described for the composition of the present invention may be combined with the process for the preparation of the composition, and vice versa. Further, features described for different embodiments of the present invention may be combined. Further advantages and features of the present invention are apparent from the examples.

### EXAMPLES

### Example 1: Process

The invention is further described with reference to the following examples. It will be appreciated that the invention as claimed is not intended to be limited in any way by these examples.

The examples are describing an extrusion process for preparing a food flavor product according to this invention showing the beneficial effect of using at least one vent stuffer located within the last 2/3 part of the total length of the extruder barrel. A dry mix of the carrier, amino nitrogen source and sugar source was added through a hopper (3) into the extruder barrel (7). The extruder barrel (4) is heated within a curve between 35 to 170°C, preferably between 80-150°C. Lipid is injected (6) within this temperature range after adding the dry mix. At least one vent stuffer is located within the last 2/3 part of the total length of the extruder barrel (one vent stuffer is located at barrel 6). The product was made on a Clextral EV 53 twin screw extruder having 10 extruder barrels from the following materials:

### Examples 2 to 5:

Comparative example 3 does not use a vent stuffer in the extrusion process.

| **Ingredient** | **Ex. 2** | **Comp. ex 3** | **Ex. 4** | **Ex. 5** |
|---|---|---|---|---|
| Sodium chloride [wt%] | 30 | 30 | 30 | 30 |
| Maltodextrin [wt%] | 60 | 60 | 62 | 61 |
| Cysteine [wt%] | 2 | 2 | 2 | 2 |
| Thiamine HCl | - | - | - | 1 |
| Xylose [wt%] | 2.5 | 2.5 | 2.5 | 2.5 |
| pH regulator (citric acid) [wt%] | 0.1 | 0.1 | 0.1 | 0.1 |
| Sunflower oil [wt%] | 2 | 2 | - | - |
| Vegetable powder [wt%] | 3.4 | 3.4 | 3.4 | 3.4 |
| Flow-ability | Free flowing, stable powder | Sticky, caking-prone powder | Free flowing, stable powder | Free flowing, stable powder |
| Sensory | +++++ | ++++ | ++++ | +++++ |
| | | Meaty, umami | | |

| | | | | |
|---|---|---|---|---|
| | Meaty, roasted, umami | | Meaty, roasted, umami | Meaty, roasted, umami |

By using at least one vent stuffer located within the last 2/3 part of the total length of the extruder barrel, a free-flowable, stable powder can be obtained compared to comparison example 3 without using a vent stuffer. Additionally, the obtained food flavor product is more intense in the flavor profile. The obtained flavor product according to the invention does not need any additional drying step. Comparison example 3 would need a drying step to increase the flow-ability and reduce the stickiness. Example 2 using a lipid is more intense in the flavor profile and the dusting of the obtained product can be reduced compared to example 4 not using a lipid. Example 5 using thiamine hydrochloride is more intense in the flavor profile compared to example 4 not using thiamine hydrochloride.

### Examples 6 to 9

Comparative examples 7 and 9 does not use a vent stuffer in the extrusion process.

| **Ingredient** | **Ex. 6** | **Comp. ex. 7** | **Ex. 8** | **Comp. ex. 9** |
|---|---|---|---|---|
| Potato starch [wt%] | 20 | 20 | 20 | 20 |
| Maltodextrin [wt%] | 30 | 30 | 35 | 35 |
| Yeast extract [wt%] | 15 | 15 | 15 | 15 |
| Dextrose [wt%] | 20 | 20 | 5 | 5 |
| Salt | - | - | 5 | 5 |
| Cyteine HCl | - | - | 5 | 5 |
| pH regulator (citric acid) [wt%] | - | - | - | - |
| Palm oil [wt%] | 5 | 5 | 5 | 5 |

| Vegetable powder (garlic) [wt%] | 10 | 10 | 10 | 10 |
|---|---|---|---|---|
| Flow-ability | Free flowing, stable powder | Sticky, caking-prone powder | Free flowing, stable powder | Sticky, caking-prone powder |
| Sensory | +++++ | ++++ | +++++ | ++++ |
| | Roasted chicken, umami, sweet | chicken, umami | Roasted chicken, umami, sweet | chicken, umami |

The same beneficial effect as shown above are also observed here. By using at least one vent stuffer located within the last 2/3 part of the total length of the extruder barrel, a free-flowable, stable powder can be obtained compared to comparison examples 7 and 9 without using a vent stuffer. Additionally, the obtained food flavor product is more intense in the flavor profile. The obtained flavor product according to the invention does not need any additional drying step. Comparison examples 7 and 9 would need a drying step to increase the flow-ability and reduce the stickiness.

### Examples 10 to 13:

Comparative examples 11 and 13 does not use a vent stuffer in the extrusion process.

| **Ingredient** | **Ex. 10** | **Comp. ex. 11** |
|---|---|---|
| Sodium chloride [wt%] | 20 | 20 |
| Corn flour [wt%] | 15 | 15 |
| Cysteine [wt%] | 5 | 5 |
| Yeast extract [wt%] | 20 | 20 |
| Methionine [wt%] | 6 | 6 |
| Rice syrup [wt%] | 4 | 4 |

| | | |
|---|---|---|
| Malt extract | 30 | 30 |
| pH regulator (citric acid) [wt%] | - | - |
| Sunflower oil [wt%] | - | - |
| Vegetable powder [wt%] | - | - |
| Flow-ability | Free flowing, stable powder | Sticky, caking-prone powder |
| Sensory | +++++ | ++++ |
| | Sweet, roasted, meaty | Sweet, umami |

| **Ingredient** | **Ex. 12** | **Comp. ex. 13** |
|---|---|---|
| Sodium chloride [wt%] | 10 | 10 |
| Maltodextrin [wt%] | 10 | 10 |
| Corn flour [wt%] | 15 | 15 |
| Cysteine [wt%] | 5 | 5 |
| Yeast extract [wt%] | 20 | 20 |
| Methionine [wt%] | 6 | 6 |
| Rice syrup [wt%] | 4 | 4 |
| Malt extract | 30 | 30 |
| pH regulator (citric acid) [wt%] | - | - |
| Sunflower oil [wt%] | - | - |
| Vegetable powder [wt%] | - | - |
| Flow-ability | Free flowing, stable powder | Sticky, caking-prone powder |
| Sensory | +++++ | ++++ |
| | Sweet, roasted, meaty | Sweet, umami |

The same beneficial effect as shown above are also observed here. By using at least one vent stuffer located within the last 2/3 part of the total length of the extruder barrel, a free-flowable, stable powder can be obtained compared to comparison examples 11 and 13 without using a vent stuffer. Additionally, the obtained food flavor product is more intense in the flavor profile. The obtained flavor product according to the invention does not need any additional drying step. Comparison examples 11 and 13 would need a drying step to increase the flow-ability and reduce the stickiness.

## Claims

1. An extrusion process for preparing a food flavor product comprising the steps of:
a) feeding an extruder barrel (7) with a composition comprising at least one carrier, at least one amino nitrogen source and at least one sugar source;
b) extruding the composition from step a) at a temperature between 35 to 170°C,
wherein at least one vent stuffer is located within the last 2/3 part of the total length of the extruder barrel.

2. The extrusion process for preparing a food flavor product as claimed in claim 1, wherein the carrier is selected from the group of maltodextrin, starch, flour, salt, fibers or a combination thereof.

3. The extrusion process for preparing a food flavor product as claimed in any one of the claims 1 to 2, wherein the food flavor product comprises the carrier in an amount of 5-95wt%.

4. The extrusion process for preparing a food flavor product as claimed in any one of the claims 1 to 3, wherein the amino nitrogen source is selected from the group of cysteine, methionine, arginine, glutathione, asparagine, glutamic acid, lysine, glutamine, thiamine, alanine, glycin, threonine, plant protein, yeast extract, bacterial extract, vegetable extract, hydrolyzed plant protein or a combination thereof.

5. The extrusion process for preparing a food flavor product as claimed in any one of the claims 1 to 4, wherein the food flavor product comprises the amino nitrogen source in an amount of 0.1-35wt%.

6. The extrusion process for preparing a food flavor product as claimed in any one of the claims 1 to 5, wherein the sugar source is selected from the group of sucrose, xylose, ribose, glucose, fructose, galactose, lactose, arabinose, ribose, dextrose, erythrose, rhamnose, mannose, isomaltose, sorbose, psicose, malt extract, rice syrup, corn syrup, carob syrup or a combination thereof.

7. The extrusion process for preparing a food flavor product as claimed in any one of the claims 1 to 6, wherein the food flavor product comprises the sugar source in an amount of 1-35wt%.

8. The extrusion process for preparing a food flavor product as claimed in any one of the claims 1 to 7, wherein the composition in step a) further comprises a lipid in an amount of 0.5-10wt%.

9. The extrusion process for preparing a food flavor product as claimed in claim 8, wherein the lipid is mixed before feeding the extruder barrel in step a) with the composition comprising at least one carrier, at least one amino nitrogen source and at least one sugar source or the lipid is injected after dry feeding the extruder barrel.

10. The extrusion process for preparing a food flavor product as claimed in any one of the claims 1 to 9, wherein no drying step after step b) is used.

11. The extrusion process for preparing a food flavor product as claimed in any one of the claims 1 to 10, wherein no further vent stuffer (4) is used at a location up-stream without a first kneading and melting section.

12. The extrusion process for preparing a food flavor product as claimed in any one of the claims 1 to 11, wherein water in an amount between 0 to 10wt% is further added to the composition of step a).

13. The extrusion process for preparing a food flavor product as claimed in any one of the claims 1 to 12, wherein the composition of step a) further comprises a vegetable powder in an amount of 0.5-30wt%.

14. The extrusion process for preparing a food flavor product as claimed in any one of the claims 1 to 13, wherein the vent stuffer has a vacuum of 0 to 2000mbar.

15. The extrusion process for preparing a food flavor product as claimed in any one of the claims 1 to 14, wherein the process further comprises a milling step after step b).

## Patentansprüche

1. Extrusionsverfahren zum Herstellen eines Nahrungsmittelaromaprodukts, umfassend die Schritte:
a) Beschicken eines Extruderzylinders (7) mit einer Zusammensetzung, umfassend mindestens einen Träger, mindestens eine Aminostickstoffquelle und mindestens eine Zuckerquelle;
b) Extrudieren der Zusammensetzung aus Schritt a) bei einer Temperatur zwischen 35 und 170 °C,
wobei sich mindestens eine Entlüftungs-Rückführeinrichtung innerhalb des letzten 2/3-Teils der Gesamtlänge des Extruderzylinders befindet.

2. Extrusionsverfahren zum Herstellen eines Nahrungsmittelaromaprodukts nach Anspruch 1, wobei der Träger ausgewählt ist aus der Gruppe von Maltodextrin, Stärke, Mehl, Salz, Fasern oder einer Kombination davon.

3. Extrusionsverfahren zum Herstellen eines Nahrungsmittelaromaprodukts nach einem der Ansprüche 1 bis 2, wobei das Nahrungsmittelaromaprodukt den Träger in einer Menge zu 5-95 Gew.-% umfasst.

4. Extrusionsverfahren zum Herstellen eines Nahrungsmittelaromaprodukts nach einem der Ansprüche 1 bis 3, wobei die Aminostickstoffquelle ausgewählt ist aus der Gruppe von Cystein, Methionin, Arginin, Glutathion, Asparagin, Glutaminsäure, Lysin, Glutamin, Thiamin, Alanin, Glycin, Threonin, Pflanzenprotein, Hefeextrakt, Bakterienextrakt, Gemüseextrakt, hydrolysiertem Pflanzenprotein oder einer Kombination davon.

5. Extrusionsverfahren zum Herstellen eines Nahrungsmittelaromaprodukts nach einem der Ansprüche 1 bis 4, wobei das Nahrungsmittelaromaprodukt die Aminostickstoffquelle in einer Menge zu 0,1-35 Gew.-% umfasst.

6. Extrusionsverfahren zum Herstellen eines Nahrungsmittelaromaprodukts nach einem der Ansprüche 1 bis 5, wobei die Zuckerquelle ausgewählt ist aus der Gruppe von Saccharose, Xylose, Ribose, Glucose, Fructose, Galactose, Lactose, Arabinose, Ribose, Dextrose, Erythrose, Rhamnose, Mannose, Isomaltose, Sorbose, Psicose, Malzextrakt, Reissirup, Maissirup, Johannisbrotsirup oder einer Kombination davon.

7. Extrusionsverfahren zum Herstellen eines Nahrungsmittelaromaprodukts nach einem der Ansprüche 1 bis 6, wobei das Nahrungsmittelaromaprodukt die Zuckerquelle in einer Menge zu 1-35 Gew.-% umfasst.

8. Extrusionsverfahren zum Herstellen eines Nahrungsmittelaromaprodukts nach einem der Ansprüche 1 bis 7, wobei die Zusammensetzung in Schritt a) ferner ein Lipid in einer Menge zu 0,5-10 Gew.-% umfasst.

9. Extrusionsverfahren zum Herstellen eines Nahrungsmittelaromaprodukts nach Anspruch 8, wobei das Lipid vor dem Beschicken des Extruderzylinders in Schritt a) mit der Zusammensetzung umfassend mindestens einen Träger, mindestens eine Aminostickstoffquelle und mindestens eine Zuckerquelle gemischt wird, oder das Lipid nach dem Trockenbeschicken des Extruderzylinders injiziert wird.

10. Extrusionsverfahren zum Herstellen eines Nahrungsmittelaromaprodukts nach einem der Ansprüche 1 bis 9, wobei kein Trocknungsschritt nach Schritt b) verwendet wird.

11. Extrusionsverfahren zum Herstellen eines Nahrungsmittelaromaprodukts nach einem der Ansprüche 1 bis 10, wobei keine weiterere Entlüftungs-Rückführeinrichtung (4) an einer stromaufwärtigen Stelle ohne einen ersten Knet- und Schmelzabschnitt verwendet wird.

12. Extrusionsverfahren zum Herstellen eines Nahrungsmittelaromaprodukts nach einem der Ansprüche 1 bis 11, wobei Wasser in einer Menge zu zwischen 0 und 10 Gew.-% ferner zu der Zusammensetzung aus Schritt a) zugegeben wird.

13. Extrusionsverfahren zum Herstellen eines Nahrungsmittelaromaprodukts nach einem der Ansprüche 1 bis 12, wobei die Zusammensetzung aus Schritt a) ferner ein Gemüsepulver in einer Menge zu 0,5-30 Gew.-% umfasst.

14. Extrusionsverfahren zum Herstellen eines Nahrungsmittelaromaprodukts nach einem der Ansprüche 1 bis 13, wobei die Entlüftungs-Rückführeinrichtung ein Vakuum von 0 bis 2000 mbar aufweist.

15. Extrusionsverfahren zum Herstellen eines Nahrungsmittelaromaprodukts nach einem der Ansprüche 1 bis 14, wobei das Verfahren ferner einen Mahlschritt nach Schritt b) umfasst.

## Revendications

1. Procédé d'extrusion pour la préparation d'un produit d'arôme alimentaire, comprenant les étapes consistant à :
a) alimenter un cylindre d'extrusion (7) avec une composition comprenant au moins un support, au moins une source d'azote aminé et au moins une source de sucre ;
b) extruder la composition de l'étape a) à une température comprise entre 35 et 170 °C,
dans lequel au moins un dispositif de réintroduction de matière au niveau de l'évent est située dans les derniers 2/3 de la longueur totale du cylindre d'extrusion.

2. Procédé d'extrusion pour la préparation d'un produit d'arôme alimentaire selon la revendication 1, dans lequel le support est choisi dans le groupe constitué de maltodextrine, amidon, farine, sel, fibres ou une combinaison de ceux-ci.

3. Procédé d'extrusion pour la préparation d'un produit d'arôme alimentaire selon l'une quelconque des revendications 1 à 2, dans lequel le produit d'arôme alimentaire comprend le support en une quantité de 5 à 95 % en poids.

4. Procédé d'extrusion pour la préparation d'un produit d'arôme alimentaire selon l'une quelconque des revendications 1 à 3, dans lequel la source d'azote aminé est choisie dans le groupe constitué de cystéine, méthionine, arginine, glutathion, asparagine, acide glutamique, lysine, glutamine, thiamine, alanine, glycine, thréonine, protéine végétale, extrait de levure, extrait bactérien, extrait végétal, protéine végétale hydrolysée ou une combinaison de ceux-ci.

5. Procédé d'extrusion pour la préparation d'un produit d'arôme alimentaire selon l'une quelconque des revendications 1 à 4, dans lequel le produit d'arôme alimentaire comprend la source d'azote aminé en une quantité de 0,1 à 35 % en poids.

6. Procédé d'extrusion pour la préparation d'un produit d'arôme alimentaire selon l'une quelconque des revendications 1 à 5, dans lequel la source de sucre est choisie dans le groupe constitué de saccharose, xylose, ribose, glucose, fructose, galactose, lactose, arabinose, ribose, dextrose, érythrose, rhamnose, mannose, isomaltose, sorbose, psicose, extrait de malt, sirop de riz, sirop de maïs, sirop de caroube ou une combinaison de ceux-ci.

7. Procédé d'extrusion pour la préparation d'un produit d'arôme alimentaire selon l'une quelconque des revendications 1 à 6, dans lequel le produit d'arôme alimentaire comprend la source de sucre en une quantité de 1 à 35 % en poids.

8. Procédé d'extrusion pour la préparation d'un produit d'arôme alimentaire selon l'une quelconque des revendications 1 à 7, dans lequel la composition à l'étape a) comprend en outre un lipide en une quantité de 0,5 à 10 % en poids.

9. Procédé d'extrusion pour la préparation d'un produit d'arôme alimentaire selon la revendication 8, dans lequel le lipide est mélangé avant l'alimentation du cylindre d'extrusion à l'étape a) avec la composition comprenant au moins un support, au moins une source d'azote aminé et au moins une source de sucre ou le lipide est injecté après l'alimentation à sec du cylindre d'extrusion.

10. Procédé d'extrusion pour la préparation d'un produit d'arôme alimentaire selon l'une quelconque des revendications 1 à 9, dans lequel aucune étape de séchage après l'étape b) n'est utilisée.

11. Procédé d'extrusion pour la préparation d'un produit d'arôme alimentaire selon l'une quelconque des revendications 1 à 10, dans lequel aucune autre dispositif de réintroduction de matière au niveau de l'évent (4) n'est utilisée au niveau d'un emplacement en amont sans une première section de malaxage et de fusion.

12. Procédé d'extrusion pour la préparation d'un produit d'arôme alimentaire selon l'une quelconque des revendications 1 à 11, dans lequel de l'eau en une quantité comprise entre 0 et 10 % en poids est en outre ajoutée à la composition de l'étape a).

13. Procédé d'extrusion pour la préparation d'un produit d'arôme alimentaire selon l'une quelconque des revendications 1 à 12, dans lequel la composition de l'étape a) comprend en outre une poudre végétale en une quantité de 0,5 à 30 % en poids.

14. Procédé d'extrusion pour la préparation d'un produit d'arôme alimentaire selon l'une quelconque des revendications 1 à 13, dans lequel le dispositif de réintroduction de matière au niveau de l'évent présente un vide de 0 à 2000 mbar.

15. Procédé d'extrusion pour la préparation d'un produit d'arôme alimentaire selon l'une quelconque des revendications 1 à 14, dans lequel le procédé comprend en outre une étape de broyage après l'étape b).
